# EUROPEAN PATENT APPLICATION

(11) **EP 1 038 909 A1**
(43) Date of publication of application: **27.09.2000**
(21) Application number: 00301884.3
(22) Date of filing: 08.03.2000
(51) Int. Cl.: C08J 11/20, C08J 11/26, C08J 11/22, C10G 1/10

(54) **Mathod for the recycling of rubber**

(30) Priority: 08.03.1999 IR 37712021
(71) Applicant: Bahman, Mir Davood, 15717 Tehran (IR)
(72) Inventor: Bahman, Mir Davood, 15717 Tehran (IR)
(74) Representative: Evens, Paul Jonathan

(57) **Abstract**

A method of re-using rubber comprising providing a batch of vulcanised rubber for re-cycling and de-vulcanising or de-polymerising the batch of rubber by heating to a temperature of from 220°C to 350°C in the presence of a hydrocarbon.

## Description

The present invention relates to the recycling of rubber, particularly scrap rubber.

Large quantities of rubber waste, including millions of used vehicle tyres, are created each year and pose an environmental problem. This is because the rubber is non-biodegradable and is non-soluble in water, and thus remains as scrap indefinitely. Burning of rubber releases a lot of energy and thus is useful for generating heat, but smoke generated during burning poses severe pollution and contamination problems to the environment.

Scrap tyre pyrolysis has been the subject of several research studies, and the Tosco II pyrolysis - research study was conceived to develop process equipment and to maximise carbon-black production and quality. In the Tosco II process, chopped tyres are fed into a rotary drum with hot ceramic balls at 480°C - 549°C in a reducing atmosphere. The rubber pyrolizes and forms a solid residue, an oil vapour and off-gases. A trommel screen separates the fire carbon-black from the ceramic balls.

Three basic processes are used in rubber reclaiming: digester, heater or pan, and the reclaimator processes. Tyres are most commonly reclaimed by digesting. Two-roll mills or other grinding devices reduce whole tyres to relatively uniform particle size. Fibre is mechanically separated from the rubber with hammer mills, blown into collectors, and baled. Metal chlorides might also be used to reduce tyre fibre chemically during digesting. Reclaiming oils and processing aids are blended with the crumb rubber in ribbon blenders or similar mixers and are transferred to a digester, which is a steam-pressurised tank equipped with horizontal mixing paddles. The blend is mixed continuously at steam pressures of 1.03-1.70 MPa (10-17 atm) for 4-6 hours. The pressurised digester batch is forced into a blowdown tank and is washed and dried. Compounding ingredients, i.e. carbon-black, clay, etc. are added to modify and maintain certain physical and chemical properties of the rubber for specific applications. Metal and other contaminants are strained from the digested rubber by extruders. High friction refining mills smooth the digested rubber into sheets. The number of mill passes vary, depending on the desired smoothness and physical properties needed in the final product. The reclaim is then baled, extruded into pellets, or made into slabs for shipment.

Butyl and natural-rubber tubes and other fibre-free scrap rubber are reclaimed by means of the heater or pan process. Brass tube fittings and other metal are removed from the scrap. The scrap is mechanically ground, mixed with reclaiming agents, loaded into pans or de-vulcanising boats, and autoclaved at steam pressures of 1.03-1.40 MPa (10-14 atm) for 3-8 hours. The reclaim is refiner-milled, extruded and finish-milled much the same as in the digester process.

The reclaimator, a high pressure extruder, de-vulcanises fibre-free rubber continuously with reclaiming oils and other materials. High pressure and shear between the rubber mixture and the extruder-barrel walls effectively reclaim the rubber mixture. De-vulcanising occurs at 175-205°C in 1-3 minutes. The Lancaster-Banbury method applies high temperature, pressure and shear to the rubber in a batch process that is otherwise similar to the reclaimator. Another high pressure process de-vulcanises scrap rubber and reclaiming agents at 5.5-6.9 MPa (54-68 atm) for ca 5 minutes. The reclaim product is milled, baled or pelletized as in other processes.

The reclaiming oils and chemicals are complex wood and petroleum derivatives and swell the rubber and provide access for oxidising the rubber bonds with heat, pressure, chemicals and mechanical shearing. Approximately 2-4 pt of oil are used per 100 pt of scrap rubber. Some examples of reclaiming oils include monocyclic and mixed terpenes, i.e. pine-tar products, saturated polymerised petroleum hydrocarbons; aryl disulfides in petroleum oil; cycloparaffinic hydrocarbons; and alkyl aryl polyether alcohols.

In addition to pryolysis and reclaiming rubber, an experimental process has been proposed to de-polymerise scrap rubber. Aromatic oils are blended with tyre crumb (e.g. ground scrap rubber tyres), and the mixture heated at 250°C to 275°C in an autoclave for 12 to 24 hours. The oils act as a heat transfer medium and swelling agent, and the heat and oil cause the rubber to de-polymerise, producing a carbon black dispersion in oil. As more de-polymerised scrap rubber (DSR) is produced and rubber is added, less aromatic oil is needed, and eventually 100% of the oil is replaced by DSR. The DSR reduces thermal oxidation of polymers and increases the tack of uncured rubber. DSR has been blended with No. 2 fuel oil as a fuel extender.

The present applicant has devised novel methods for recycling rubber.

In accordance with a first aspect of the present invention, there is provided a method of re-using rubber, comprising: providing a batch of vulcanised rubber for recycling; and de-vulcanising the batch of rubber by heating to a temperature of from 220°C to 350°C in the presence of a hydrocarbon.

The de-vulcanisation may be carried out at a pressure of no more than 5 atmospheres, possibly at atmospheric pressure, and may even be carried out at a temperature of from 220°C to 320°C. The method may further comprise comminuting or grinding the batch of rubber to produce particulate material. In this way, up to 90% of the rubber may be re-cycled for subsequent re-use - as little as 10% may be damaged in the process and converted to a non-usable residue.

Rubbers are polymeric materials, a good example being SBR (styrene-butadiene-rubber). The polymer chain resulting from polymerisation of styrene-butadiene includes a carbon-to-carbon double bond. By using sulphur in rubber vulcanisation, allyl hydrogen next to the double bond acts as a site for sulphur addition, thereby providing a branch connecting polymer chains together. De-vulcanisation of such rubber by heating can break the sulphur connection between the chains, causing the cross-linked polymer to reform as a linear polymer. Of course, the linear polymers may crack and produce polymers with shorter chain lengths. During de-vulcanisation, three kinds of substances are produced:
1. Gases: which may usually be ethylene, propylene and butylene.
2. Liquids: oils and gasoline-type fuels perhaps resulting from cracking of linear polymers.
3. Carbon: which may accumulate as a residue in the bottom of a reactor vessel.

The method may further comprise burning the gas or liquid fractions to generate heat for de-vulcanising a new batch of vulcanised rubber subsequently.

In the method, the hydrocarbon may be gaseous and may comprise natural gases, perhaps selected from the group consisting of methane, ethane, propane and butane. The method may comprise purging the batch of rubber with the gaseous hydrocarbon during de-vulcanisation, perhaps in the absence of oxygen. Re-cycling of used rubber in this way yields a much greater de-vulcanised product than known methods.

The residue at the bottom of the reactor may be in the form of reclaimed rubber (a processable and thermoplastic material) - literally black chunks which may be recycled by adding 10% of resin and repeating the vulcanisation process. The black chunks may typically include additional materials such as carbon black, zinc oxide and other fillers. Therefore, recycling of rubber during this process does not require any additives other than the 10% of resin. A small amount of plasticizer and reinforcing agents, some sulphur (for vulcanising the reactants) and an accelerator may be added as required.

The method may further comprise controlling oxygen levels during de-vulcanisation. De-vulcanisation - and even pyrolysis - of rubber may occur by oxidation of sulphur bonds between polymer chains. Controlling oxygen levels during de-vulcanisation may determine the ratio of carbon to liquid (e.g) oil in the products forming the yield. Controlling oxygen levels by purging with hot air may be important when mixing the batch of rubber with used lubricating oil, asphalt or oxidised asphalt. In this way, the liquid fraction may be controlled and even increased.

The de-vulcanisation process may produce high yields of oil as well as carbon. The oil results from cracking of the rubber polymer chains at above 220°C in the presence of oxygen. At the same time some fatty acids may also be produced, but the majority of the yield will be the oil resulting from breaking of carbon-to-carbon bonds of the polymer chain. The oil may be used in place of Dioctyl phthalate (DOP) oil as a softener in the rubber industry. If added as an ingredient to rubber compositions, the oil may also increase the resistance of NBR rubber to attack by hydrocarbons.

According to a second aspect of the present invention, there is provided a method of preparing an ink or paint composition, comprising: providing a batch of rubber for recycling; and de-polymerising the batch of rubber by heating to a temperature of from 220°C to 300°C in the presence of an organic liquid (e.g. used lubricating oil or a drying oil).

Another use of scrap rubber is in the preparation of ink and paint. During de-polymerisation, polymer chains are produced which are supporting materials for inks and the like. Heating the blend of scrap rubber and used lubricating oil or drying oils to between 220° and 300°C may produce polymer chains which may replace the resins found in conventional inks. By changing the reaction conditions, suitable supporting materials for all kinds of ink can be produced. By adding additives - such as driers (e.g. soaps of cobalt, manganese and lead formed with organic acids such as linolenic, napthanic, and octanic acids) or by using drying oils such as soya bean oil, flox oil, linseed oil and castor oil, printing ink may be produced. By adding pigment and suitable resin to this ink, ball pen ink is produced; with no additives, the ink may be used as stamping ink. For a homogeneous printing ink, additives such as phelonic resin are required. Used scrap rubber of different colours may be used to produce inks or paints of corresponding colours.

The organic liquid may comprise a drying oil, for example soybean oil, flux oil, linseed oil or castor oil, or alternatively a used lubricating oil. The de-polymerisation may occur at about 250°C. The viscous liquid obtained from de-polymerisation of scrap rubber blended with used lubricating oil may be used as a stamp ink (without additives). The viscous liquid obtained from de-polymerisation of scrap rubber with drying oil or a mixture of drying oil and used lubricating oil may be used as a printing ink (with additives such as a drier, e.g. lead napthant). Other additives may include a phenolic resin which helps the ink form a film which is important in the printing industry. (The printing ink may be fine ground to break up any lumpy residues).

According to a third aspect of the present invention, there is provided a method of re-using rubber, comprising: providing a batch of rubber for recycling; and de-polymerising the batch of rubber by heating to a temperature of from 250°C to 300°C in the presence of oxidised asphalt and a linear polymer. The linear polymer may be selected from the group consisting of PVC (poly vinyl chloride) and polyethylene. The linear polymer may even be a mixture of PVC and polyethylene. The linear polymer may be present in an amount of about 10% by weight of reactants prior to de-polymerisation.

De-polymerisation of the rubber in the presence of the linear polymers produces a novel polymerised product. The linear polymers act radically and react with double bonds of the rubber to produce branched and close-network polymers that have their own characteristics as a hard polymer which may be used for pipe manufacture or as an additive in asphalt for pavements and the like.

Embodiments of the invention will now described by way of example with reference to the following:

### Recovery of Rubber from Used Rubber

A batch of used, ground rubber (vulcanised) is placed in a closed reactor and purged with gaseous hydrocarbons (methane, ethane, propane and butane) at 250°C to 350°C for at least two hours. As a result, 90% of the used rubber turns into black pieces of reclaimed rubber; and 10% of the used rubber is converted to gases such as ethylene, propylene and butylene or liquid (e.g. gasoline) and exit the reactor during the de-vulcanisation process.

Recovered black pieces may be mixed with resin in the ratio 100 (parts reclaimed rubber) to 10 (parts resin), together with plasticizer and reinforcing agents, and vulcanised to form the recycled rubber. (The resin should be the same as the resin in scrap rubber which is damaged during de-vulcanisation). Since additives like carbon black and fillers already exist in the black pieces, no additives for the vulcanisation of the mixture are required.

### Process of De-vulcanisation of Used Rubber for Producing Oil

A batch of ground, used rubber (vulcanised) is mixed with used lubricating oil, asphalt or oxidised asphalt in a reactor at 250°C for at least 2 hours whilst passing hot air through the mixture. De-vulcanisation and de-polymerisation of the used rubber takes place, forming shorter polymer chains in the form of oil and carbon residues, perhaps with a high surface area particularly if hot steam is passed through the residue. The ratio of oil to carbon reside depends on the amount of resin used in the scrap rubber.

The oil obtain during this process may be used as a replacement for DOP, and may be used as a plasticizer in the rubber industry and makes nitrile rubber more resistant to gasoline, engine oil, diesel oil and other solvents.

### Production of Ink from Used Rubber

A batch of ground used rubber (vulcanised) is mixed with drying oils, copolymers of drying oils, hydrocarbonic oils or a mixture of them and held in a reactor at 250°C - 300°C. The oil acts as a heat-transfer medium and swelling agent and the heat and the oil cause the rubber to devulcanise and de-polymerise. This produces a viscous liquid which, by adding additives such as driers, a printing ink is obtained. The driers are soaps of cobalt, manganese and lead formed with organic acids such as linolenic, napthanic and octanic acids; they catalyse oxidation of drying oils.

For producing homogenous printing inks, phenolic resins may be added to the viscous liquid, as this helps the ink for form a film which is very important in the printing industry.

For producing non-drying inks such as stamping inks, the scrap rubber is blended with used lubricating oil or hydrocarbonic oils.

### Advantages and Uses of the Invention

By hydrocarbon gases and heat, the process of de-vulcanisation of used rubber takes place, with as little as only 10% of resin damage, but the filler used in the rubber such as zinc oxide, SiO₂ and carbon black for vulcanisation process of rubber, remain undamaged during the de-vulcanisation of used rubber. The process of the recovery of rubber is in a horizontal mixer at least at atmospheric pressure. Depending on the grade of the rubber difference type of gases such as methane, ethane, propane and butane are purged. Since the produced gases are unsaturated they can be used in a petrochemical company as raw materials.

From used rubber according to the description of the invention, oil for softener of rubber and plastic can be produced which has good resistance against gasoline, diesel oil and other hydrocarbon solvents and can substitute DOP in nitrile rubber.

From de-polymerisation of used rubber all kinds of ink can be produced, because it has good supporting material for ink according to the description of the invention.

From used coloured rubber one produces ink of corresponding colour.

From used colour rubber can be produced all kinds of coloured ink and from black rubber can get black colour ink.

Recovered rubber at different conditions has different properties so that recovery of used rubber can be employed as a component in the production of tyres, shoes, rubber parts for cars and other domestic applications.

De-vulcanisation of used rubber is by heat. Heat may be added to the system by gases or hydrocarbon liquids. If heat is given by gas, the gas is separated from the media afterward and carries out the generated hydrocarbon in the system. However, if the heat is added to the system by liquid hydrocarbon, the liquid combines with the generated hydrocarbon and the resin in the media and converts into ink. The system pressure causes cracking or polymerisation of the hydrocarbon chains.

By passing the hot hydrocarbon gases through the crushed used rubber one can produce hydrocarbon liquid, ethylene, propylene, butylene and carbon with a high surface area close to that of active carbon.

If used rubber is heated and blended with heavy hydrocarbon which is used in the manufacture of carbon-black and heated at about 300°C for 2-4 hours, the heat (which exists in the process of the manufacture of carbon-black) and oil cause the rubber to de-polymerise. If the de-polymerised used scrap rubber is blended with the feed for manufacturing carbon black, carbon black of large surface area will be produced.

If used rubber is de-polymerised in softeners such as NBR in DOP and SBR in hydrocarbon oil or used lubricating oil, asphalt and oxidised asphalt, carbon black and fillers as well as de-polymerised and suspended resins in oil can be used as a softener or plasticizer in the rubber industry.

Heating the blend of used rubber and the residue from fuel oil cracking, de-vulcanises and de-polymerises the rubber and can be used as a component in rubber manufacture.

The liquid obtained from the resin which is damaged during de-vulcanisation and brought out from the reactor may be separated and used for heating the process subsequently, so the method is self-generating in this respect.

## Claims

1. A method of re-using rubber comprising:
providing a batch of vulcanised rubber for re-cycling: and
de-vulcanising the batch of rubber by heating to a temperature of from 220°C to 350°C in the presence of a hydrocarbon.

2. A method according to claim 1, wherein de-vulcanisation is carried out at a pressure of 5 atmospheres or less.

3. A method according to claim 2, wherein de-vulcanisation is carried out at atmospheric pressure.

4. A method according to any one of claims 1 to 3, wherein the batch of rubber is heated to a temperature of from 220°C to 300°C.

5. A method according to any one of the preceding claims, wherein the batch of rubber comprises particulate material.

6. A method according to any one of the preceding claims, wherein the hydrocarbon is a gaseous hydrocarbon, perhaps selected from the group consisting of methane, ethane, propane or butane.

7. A method according to claim 6, further comprising purging the batch of rubber with the gaseous hydrocarbon during de-vulcanisation.

8. A method according to any one of claims 6 to 7, further comprising recovering a solid residue after de-vulcanisation, mixing the solid residue with a resin (perhaps 10% by weight) and vulcanising the mixture.

9. A method according to any one of claims 1 to 5, further comprising controlling oxygen levels during de-vulcanisation.

10. A method according to claim 9, wherein the hydrocarbon is a heavy oil, perhaps engine oil, or asphalt.

11. A method according to claim 9 or 10, further comprising de-vulcanising the batch of rubber in the presence of hot air.

12. A method according to claim 9,10 or 11, further comprising collecting an oil produced during de-vulcanisation.

13. A method according to any one of claims 1 to 5, further comprising mixing the batch of rubber with an organic liquid prior to de-vulcanisation.

14. A method according to claim 13, in which the hydrocarbon is the organic liquid.

15. A method according to claim 13 or 14, in which the organic liquid is a drying oil, for example linseed oil or castor oil.

16. A method according to any one of claims 13 to 15, further comprising collecting a viscous liquid after de-vulcanisation for use as an ink.

17. A method of preparing an ink or paint composition, comprising:
providing a batch of rubber for re-cycling; and de-polymerising the batch of rubber by heating to a temperature of from 220°C to 300°C in the presence of an organic liquid.

18. A method according to claim 17, in which the organic liquid comprises a used lubricating oil.

19. A method according to claim 17 or 18, in which the organic liquid comprises a drying oil.

20. A method according to claim 19, in which the drying oil is selected from the group consisting of soya bean oil, flux oil, linseed oil and castor oil.

21. A method of re-using rubber, comprising:
providing a batch of rubber for re-cycling; and
de-polymerising the batch of rubber by heating to a temperature of from 250°C to 300°C in the presence of a linear polymer.

22. A method according to claim 21, in which the linear polymer is selected from the group consisting of PVC (poly vinyl chloride) and polyethylene.

23. A method according to claim 21 or 22, in which the linear polymer is present in an amount of about 10% by weight of reactants prior to de-polymerisation.

24. A method according to one of claims 21 to 23, further comprising de-polymerising the batch of rubber in the presence of a low molecular weight linear polymer (e.g. oxidised asphalt).
